# FASCICULE DE BREVET EUROPEEN

(11) **EP 3 865 031 B1**
(45) Date de publication et mention de la délivrance du brevet: **08.07.2026**
(21) Numéro de dépôt: 21156070.1
(22) Date de dépôt: 09.02.2021
(51) Int. Cl.: A47J 37/07

(54) **BARBECUE ET BLOC POUR BARBECUE**
GRILL UND BLOCK FÜR GRILL
BARBECUE AND UNIT FOR BARBECUE

(30) Priorité: 14.02.2020 FR 2001497; 14.02.2020 FR 2001498
(43) Date de publication de la demande: 18.08.2021
(73) Titulaire: Application des Gaz, 69230 Saint-Genis Laval (FR)
(72) Inventeur: ARNAUD, Sylvain (Jean-Marc), 69630 CHAPONOST (FR)
(74) Mandataire: Page White Farrer

(56) Documents cités:
- WO-A1-2019/084630
- US-A- 5 313 877
- US-A1- 2017 319 007
- US-A1- 2018 160 848

## Description

### Etat de la technique

On connait par le document FR3003149A1 un barbecue à gaz du type comportant un chariot et divers éléments montés sur le chariot tels qu'une grille de cuisson, une plaque de cuisson, des brûleurs à gaz, des boutons de régulation d'alimentation en gaz, des boutons de mise à feu ou encore des tiroirs de collection de graisses de cuisson.

Bien qu'apportant satisfaction un tel type de barbecue à gaz peut encore être amélioré. En particulier, le montage, le démontage, la maintenance, le nettoyage ou encore l'utilisation peuvent être facilités. La présente demande vise à atteindre tout ou partie de ces objectifs.

US2018/160848A1 divulgue une cuisinière comprenant un siège de base et un siège supérieur disposé sur le siège de base. Le siège supérieur a une paroi d'enceinte s'étendant vers le haut, un élément de support et une grille de gril. La paroi d'enceinte a des première et seconde parties de paroi opposées. La première partie de paroi définit une première rainure. La seconde partie de paroi définit une seconde rainure et une rainure de retenue sous la seconde rainure. L'élément de support est disposé sur la première partie de paroi sous la première rainure. La grille de gril est disposée dans l'une d'une première position, où les extrémités latérales opposées de la grille de gril sont respectivement retenues dans les première et seconde rainures, et dans une seconde position, où une extrémité latérale est placée sur l'élément de support tandis que l'autre extrémité latérale est retenu dans la rainure de retenue.

WO2019/084630A1 divulgue un barbecue comprenant une chambre de source de chaleur formée avec une paroi d'enceinte, ledit barbecue comprenant un système de support pour supporter au moins une plaque de cuisson ou une grille ou d'autres moyens de support d'aliments, dans lequel ladite paroi d'enceinte comprend une partie de paroi amovible qui est séparable du reste dudit mur.

US2017/319007A1 divulgue une poêle comprenant une base avec une ouverture configurée pour la sortie de graisse, d'huile et de graisse de la poêle à griller et un dispositif de fermeture configuré pour ouvrir et fermer de manière fonctionnelle l'ouverture.

US 5313877A divulgue un barbecue gril comprenant un boîtier inférieur, des moyens de chauffage et des moyens de support d'aliments positionnés à l'intérieur du boîtier inférieur, un boîtier supérieur ou capot adapté pour enfermer le boîtier inférieur, un bac à graisse collecteur de graisse monté à l'intérieur de la surface supérieure du boîtier inférieur de manière à empêcher un flux de chaleur autour de celui-ci dans le boîtier supérieur, et une pluralité d'ouvertures prévues adjacentes à au moins une partie du périmètre du boîtier inférieur pour fournir un flux de chaleur du boîtier inférieur dans le boîtier supérieur.

### Résumé

L'invention concerne un barbecue tel que défini par les revendications. Les aspects de la présente divulgation ne tombant pas dans le champ de protection des revendications ne font pas partie de l'invention mais peuvent être utiles à sa compréhension.

Un aspect de la présente demande, présenté à titre illustratif et ne faisant pas partie de l'objet revendiqué, concerne un barbecue comportant: un cadre; et un bloc comprenant un organe de génération de chaleur et un organe de régulation d'alimentation couplé à l'organe de génération de chaleur, le bloc étant configuré pour être monté sur le cadre d'un seul tenant et en alternance démonté du cadre d'un seul tenant.

Le bloc peut être monté sur le cadre en configuration d'utilisation. Le bloc peut être démonté du cadre en configuration de nettoyage. Le bloc peut être monté sur le cadre sans séparer l'organe de génération de chaleur et l'organe de régulation d'alimentation. Le bloc peut être démonté du cadre d'un seul tenant sans séparer l'organe de génération de chaleur et l'organe de régulation d'alimentation. Ainsi, le montage et le démontage du barbecue peuvent être facilités.

Le barbecue peut être un barbecue à gaz, l'organe de génération de chaleur peut être un brûleur et l'organe de régulation d'alimentation peut être un organe de régulation d'alimentation en gaz.

Alternativement, le barbecue peut être un barbecue électrique, l'organe de génération de chaleur peut être une résistance électrique et l'organe de régulation d'alimentation peut être un organe de régulation d'alimentation en électricité.

Le barbecue peut comporter un collecteur de graisses de cuisson disposé à l'aplomb du bloc.

Le bloc peut être configuré pour être monté sur le cadre par une face avant du barbecue et en alternance démonté du cadre par la face avant du barbecue.

Le bloc peut être configuré pour être monté sur le cadre par mouvement horizontal d'avant en arrière et en alternance démonté du support par mouvement horizontal d'arrière en avant ; et/ou le bloc peut être configuré pour être monté sur le cadre par mouvement vertical de haut en bas et en alternance démonté du cadre par mouvement vertical de bas en haut.

Le bloc peut être configuré pour être verrouillé sur le cadre et en alternance déverrouillé du cadre.

Le bloc peut être verrouillé sur le cadre en configuration d'utilisation et déverrouillé du cadre en configuration de nettoyage. Ainsi, le risque de démontage accidentel du bloc en configuration d'utilisation est réduit.

Le bloc peut être configuré pour être verrouillé horizontalement sur le cadre et en alternance déverrouillé horizontalement du cadre.

Le bloc peut être verrouillé sur le cadre et déverrouillé du cadre par l'intermédiaire d'une paroi latérale d'une cuve de cuisson.

Le bloc peut comprend en outre : un boîtier; une batterie ; un organe de mise à feu couplé à l'organe de génération de chaleur; un indicateur lumineux de mise à feu couplé à l'organe de génération de chaleur; un circuit électronique connectant la batterie à l'organe de mise à feu; et/ou au moins un circuit électronique connectant la batterie à l'indicateur lumineux de mise à feu.

Le bloc peut comprendre tout ou partie des composants électroniques et des composants gaz du barbecue. Le bloc peut être monté sur le cadre sans séparer les composants électroniques et les composants gaz du barbecue. De même, le bloc peut être démonté du cadre sans séparer les composants électroniques et les composants gaz du barbecue. Ainsi, le montage et le démontage du barbecue peuvent être facilités plus encore.

Le bloc peut comprendre un bouclier thermique configuré pour isoler thermiquement l'organe de régulation d'alimentation; la batterie ; l'organe de mise à feu; l'indicateur lumineux de mise à feu ; le circuit électronique connectant la batterie à l'organe de mise à feu; et/ou le circuit électronique connectant la batterie à l'indicateur lumineux de mise à feu.

Le bouclier thermique peut protéger tout ou partie des composants électroniques de la chaleur généré par l'organe de génération de chaleur en configuration d'utilisation. Ainsi, le risque d'altération des composants électroniques en configuration d'utilisation peut être réduit et la durée de vie du barbecue peut être allongée.

Un aspect de la présente demande, présenté à titre illustratif et ne faisant pas partie de l'objet revendiqué, concerne un bloc pour un barbecue comportant un cadre, le bloc comprenant un organe de génération de chaleur et un organe de régulation d'alimentation couplé à l'organe de génération de chaleur, le bloc étant configuré pour être monté sur le cadre d'un seul tenant et en alternance démonté du cadre d'un seul tenant.

Un aspect de la présente demande, présenté à titre illustratif et ne faisant pas partie de l'objet revendiqué, concerne un barbecue comportant: un cadre; et un collecteur de graisses de cuisson configuré pour être monté sur le cadre par une face avant du barbecue et en alternance démonté du cadre par la face avant du barbecue.

Le collecteur de graisses de cuisson peut être monté sur le cadre en configuration d'utilisation. Le collecteur de graisses de cuisson peut être démonté du cadre en configuration de nettoyage. Le collecteur de graisses de cuisson peut être monté sur le cadre par la face avant (et non par une face latérale ou une face arrière). Le collecteur de graisses de cuisson peut être démonté du cadre par la face avant (et non par une face latérale ou une face arrière). Ainsi, le montage et le démontage du barbecue peuvent être facilités.

Le collecteur de graisses de cuisson peut comporter un orifice de vidange.

L'orifice de vidange permet d'effectuer une vidange des graisses de cuisson collectées dans le collecteur de graisses de cuisson en configuration d'utilisation sans démonter complètement le collecteur de graisses de cuisson du support et sans pencher ou retourner le collecteur de graisses de cuisson. Ainsi, les risques de salissure du barbecue et de brûlure de l'utilisateur sont réduits.

L'orifice de vidange peut être disposé sur une paroi de fond du collecteur de graisses de cuisson.

L'orifice de vidange permet d'effectuer une vidange des graisses de cuisson collectées dans le collecteur de graisses de cuisson en configuration d'utilisation en laissant un minimum de graisses de cuisson résiduelles. Ainsi, le nettoyage du collecteur de graisses de cuisson est facilité.

La paroi de fond peut être conformée de manière à guider les graisses de cuisson collectées dans le collecteur de graisses de cuisson vers l'orifice de vidange par écoulement.

Ainsi, l'orifice de vidange permet d'effectuer une vidange des graisses de cuisson collectées dans le collecteur de graisses de cuisson en configuration d'utilisation sans laisser de graisses de cuisson résiduelles. Ainsi, le nettoyage du collecteur de graisses de cuisson est encore plus facilité.

La paroi de fond peut comprendre une pluralité de portions convergeant vers l'orifice de vidange.

La paroi de fond peut comprendre une pluralité de portions trapézoïdales convergeant vers l'orifice de vidange.

Le barbecue peut comporter une plaque de cuisson ou une grille de cuisson, dans lequel la plaque de cuisson ou la grille de cuisson comporte au moins un orifice; et dans lequel le collecteur de graisses de cuisson et la plaque de cuisson ou la grille de cuisson sont configurés pour être agencés de sorte que le collecteur de graisses de cuisson soit disposé sous l'orifice.

L'orifice permet aux graisses de cuisson d'être collectées par le collecteur de graisses de cuisson. L'orifice permet alternativement ou également de verser de l'eau dans le collecteur de graisses de cuisson afin d'éviter que les graisses de cuisson n'accrochent au collecteur de graisses de cuisson sans démonter le collecteur de graisses de cuisson du support. Ainsi, le nettoyage du collecteur de graisses de cuisson peut être facilité.

Le collecteur de graisses de cuisson peut comporter un obturateur configuré pour obturer l'orifice de vidange et en alternance désobturer l'orifice de vidange.

L'obturateur permet d'effectuer la vidange des graisses de cuisson collectées dans le collecteur de graisses de cuisson de manière contrôlée par exemple lorsque les graisses de cuisson ne sont plus brûlantes. Ainsi, le risque de brûlure de l'utilisateur est réduit.

Le barbecue peut comporter un organe de commande configuré pour être déplacé entre une première position de commande dans laquelle l'organe de commande commande l'obturateur de manière à obturer l'orifice de vidange et en alternance dans une seconde position de commande dans laquelle l'organe de commande commande l'obturateur de manière à désobturer l'orifice de vidange.

L'organe de commande peut être disposé à l'extérieur du collecteur de graisses de cuisson de manière à permettre le déplacement de l'organe de commande sans toucher les graisses de cuisson.

Selon l'invention le barbecue comporte un cadre et un premier collecteur de graisses de cuisson configuré pour être monté sur le cadre par la face avant du barbecue et en alternance démonté du cadre par la face avant du barbecue et un second collecteur de graisses de cuisson configuré pour être monté sur le cadre par la face avant du barbecue et en alternance démonté du support par la face avant du barbecue; le premier collecteur de graisses de cuisson est configuré pour collecter des premières graisses de cuisson et le second collecteur de graisses de cuisson est configuré pour collecter des secondes graisses de cuisson.

Le premier collecteur de graisses de cuisson peut être configuré pour collecter des premières graisses de cuisson produites par la cuisson de viandes sur une première portion d'une plaque, grille et/ou broche de cuisson. Le second collecteur de graisses de cuisson peut être configuré pour collecter des secondes graisses de cuisson produites par la cuisson de légumes ou poissons sur une seconde portion de la plaque, grille et/ou broche de cuisson. Ainsi, les premières et secondes graisses de cuisson peuvent être collectées séparément et utilisées pour la réalisation de différentes sauces.

Le barbecue peut comporter un récipient ou un accessoire agencé pour récupérer les graisses de cuisson en provenance du ou des colleteurs de graisses de cuisson.

Le collecteur de graisses de cuisson peut avoir une capacité d'au moins 1 litre et est disposé à l'aplomb d'un brûleur de manière à permettre une hydratation d'aliment disposés sur une grille de cuisson ou une plaque de cuisson lorsque le collecteur de graisses de cuisson est rempli d'eau.

Une capacité minimum de 1 Litre pour un brûleur permet de créer une quantité de vapeur d'eau suffisante lors de la cuisson afin d'hydrater les aliments. Une capacité minimum de 1,5 Litre pour deux brûleurs permet de créer une quantité de vapeur d'eau suffisante lors de la cuisson afin d'hydrater les aliments. Une capacité maximum de 3 litres pour un ou deux brûleurs permet de limiter la taille du collecteur de graisses de cuisson.

Le collecteur de graisses de cuisson peut être séparé du brûleur d'une distance comprise entre 9cm et 14cm. La distance actuelle entre un axe du brûleur et le fond du collecteur de graisses de cuisson peut être de l'ordre de 11,5 cm.

Le collecteur de graisses de cuisson peut être séparé de la grille de cuisson ou de la plaque de cuisson d'une distance comprise entre 17cm et 22cm.

La distance entre un axe du brûleur et le dessus de la plaque de cuisson ou de la grille de cuisson peut être de l'ordre de 8 cm.

Ces aspects seront bien compris à l'aide de la description qui suit en référence aux dessins schématiques annexés représentant à titre d'exemple non limitatif une forme d'exécution.

### Brève description des dessins

Figure 1 est une vue en perspective de dessus d'un barbecue dans une configuration d'utilisation ;
Figure 2 est une vue en perspective de dessus du barbecue de Figure 1 dans une première configuration de nettoyage dans laquelle une plaque de cuisson et une grille de cuisson sont enlevées du barbecue;
Figure 3 est une vue en perspective de dessus du barbecue de Figure 1 dans une deuxième configuration de nettoyage dans laquelle des parois latérales d'une cuve de cuisson sont enlevées du barbecue sans outils ;
Figure 4 est une vue en perspective de dessus du barbecue de Figure 1 dans une troisième configuration de nettoyage dans laquelle des tiroirs de collection de graisses de cuisson sont enlevés du barbecue ;
Figure 5 est une vue en perspective de dessus du barbecue de Figure 1 dans une configuration permettant d'enlever un bloc technique gaz en vue de maintenance ou réparation, par exemple auprès d'un service après-vente. ;
Figure 6 est une vue en perspective de dessus d'un tiroir de collection de graisses de cuisson pour le barbecue de Figure 1;
Figure 7 est une représentation schématique en perspective de dessus d'un cadre pour le barbecue de Figure 1;
Figure 8 est une vue en perspective de dessus de parois latérales avant d'une cuve de cuisson et d'un bloc technique gaz pour le barbecue de Figure 1;
Figure 9 est une vue en perspective de dessous du bloc technique gaz de Figure 8 ; et
Figure 10 est une vue en perspective de dessus dans une configuration dans laquelle des graisses de cuisson collectées dans un tiroir de collection de graisses de cuisson sont évacuées.

### Description détaillée des dessins

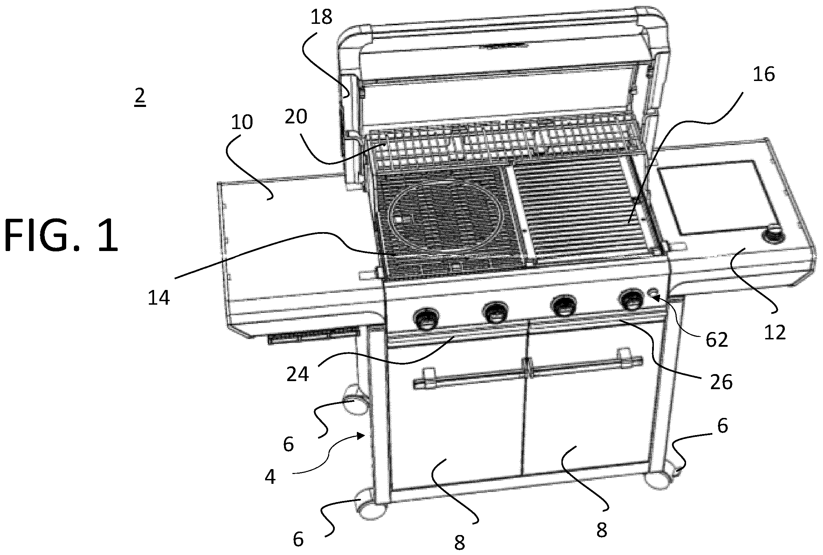

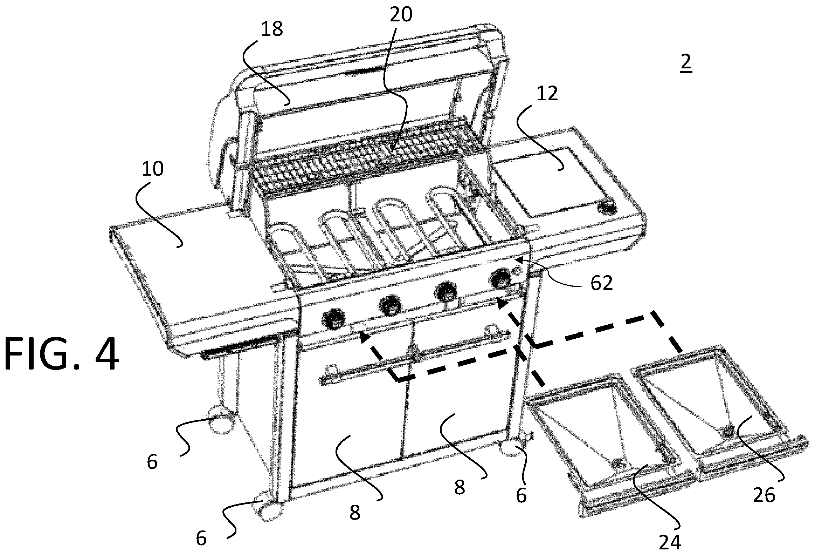

Les Figures 1 à 4 représentent un barbecue 2 en configuration d'utilisation et en configuration de nettoyage. Ici, l'expression « configuration d'utilisation » fait référence à une configuration dans laquelle tous les éléments du barbecue 2 sont montés sur le barbecue 2 tandis que l'expression « configuration de nettoyage » fait référence à une configuration dans laquelle au moins un élément du barbecue 2 est démonté pour être nettoyé.

Le barbecue 2 peut comporter un chariot 4. Le chariot 4 peut comprendre une structure, par exemple une structure métallique, bois ou plastique. La structure peut comprendre des jambes s'étendant verticalement. Les jambes présentent des extrémités inférieures et des extrémités supérieures. La structure peut comprendre des traverses inférieures s'étendant horizontalement et reliant les extrémités inférieures des jambes. La structure peut comprendre des traverses supérieures s'étendant horizontalement et reliant les extrémités supérieures des jambes. Le chariot 4 peut comprendre des roues 6 montées sous la structure aux extrémités inférieures des jambes. Le chariot 4 peut comprendre une paroi latérale gauche, une paroi latérale droite et une paroi latérale arrière montées sur la structure. La paroi latérale gauche, la paroi latérale droite et la paroi de fond délimitent un volume de rangement dans lequel peuvent être disposés une bombonne de gaz, un récipient pour récupérer des graisses de cuisson, des ustensiles de cuisines, des aliments ou autre. Le chariot 4 peut comprendre des portes avant 10 configurées pour être ouvertes et en alternance fermées par un utilisateur afin d'accéder au volume de rangement. Ici, les portes avant sont montées pivotantes sur les jambes.

Le barbecue 2 peut comporter un plan de travail latéral gauche 10 et un plan de travail latéral droit 12. Le plan de travail latéral gauche 10 et le plan de travail latéral droit 12 peuvent être montés sur le chariot 4. Le plan de travail latéral gauche 10 et le plan de travail latéral droit 12 peuvent s'étendre dans un même plan.

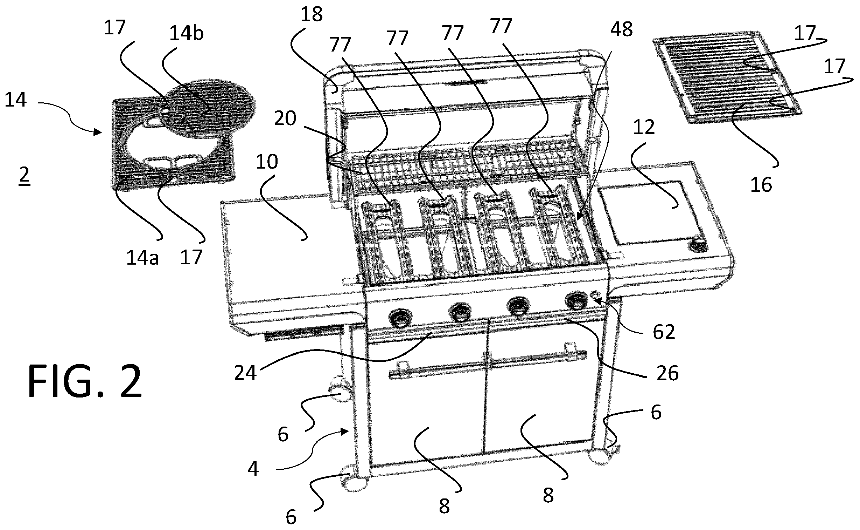

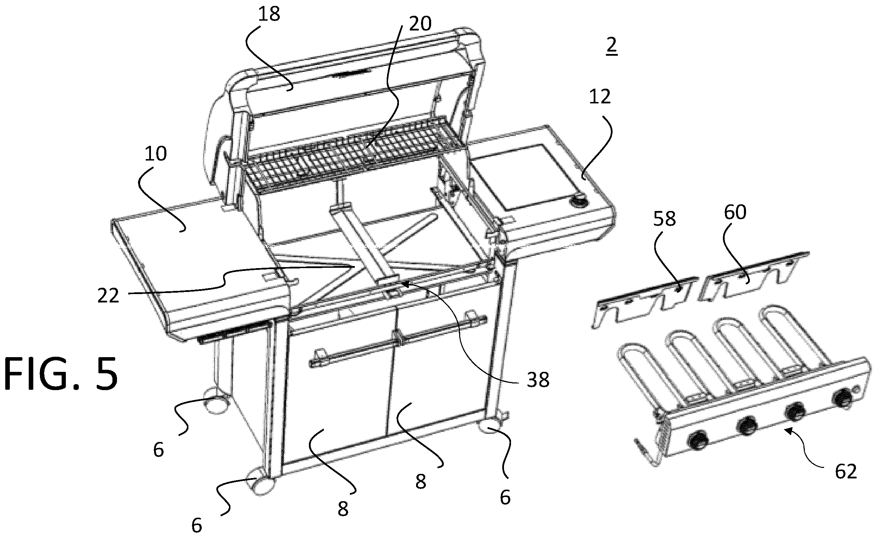

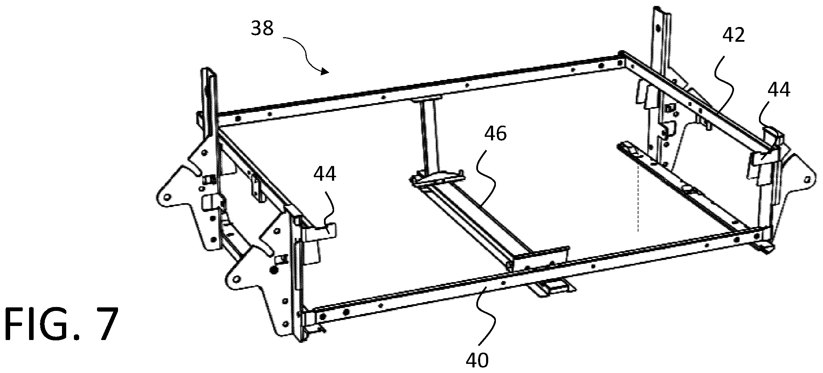

Le barbecue 2 peut comporter une grille de cuisson 14 et une plaque de cuisson 16. La grille de cuisson 14 et la plaque de cuisson 16 peuvent être configurées pour être montées sur un cadre 38, ou cadre soudé 38, (plus visible aux Figures 5 et 7 et décrit plus loin) et en alternance démontées du cadre 38. Ici, la grille de cuisson 14 et la plaque de cuisson 16 s'étendent dans le même plan que le plan de travail latéral gauche 10 et le plan de travail latéral droit 12. La grille de cuisson 14 (plus visible à la Figure 2) peut comprendre une première partie 14a rectangulaire pourvue d'une ouverture circulaire et une seconde partie 14b circulaire configurée pour être montée dans l'ouverture circulaire et en alternance démontée de l'ouverture circulaire. La plaque de cuisson 16 peut être rectangulaire. La grille de cuisson 14 et la plaque de cuisson 16 peuvent être pourvues d'orifices 17 dont l'utilité sera apparente plus loin.

Le barbecue 2 peut comporter un capot 18 monté sur le chariot 4. Le capot 18 peut être configuré pour être relevé et en alternance abaissé par l'utilisateur afin d'accéder à la grille de cuisson 14 et à la plaque de cuisson 16 et en alternance afin de recouvrir la grille de cuisson 14 et la plaque de cuisson 16. Ici, le capot 18 est monté pivotant sur le chariot 4.

Le barbecue 2 peut également comporter une grille de mijotage 20. La grille de mijotage 20 peut être configurée pour être montée sur le capot 18 et/ou sur des pare-vents 21 et en alternance démontée du capot 18 ou des pare-vents 21. Ici, la grille de mijotage 20 s'étend au-dessus de la grille de cuisson 14 et de la plaque de cuisson 16. La grille de mijotage 20 est moins profonde (dans une direction d'avant en arrière) que la grille de cuisson 14 et la plaque de cuisson 16. La grille de cuisson peut être remplacée par une broche de rôtisserie ou autre.

Le barbecue 2 peut comporter un écran de protection de chaleur 22 (plus visible à la Figure 5). L'écran de protection de chaleur 22 peut s'étendre horizontalement sensiblement à hauteur des portes avant 8 du chariot 4.

Le barbecue 2 peut comporter un tiroir de collection de graisses de cuisson gauche 24 et un tiroir de collection de graisses de cuisson droit 26. Le tiroir de collection de graisses de cuisson gauche 24 et le tiroir de collection de graisses de cuisson droit 26 peuvent être montés coulissants sur le cadre 38, par exemple sur une partie inférieure 40 du cadre 38. Le tiroir de collection de graisses de cuisson gauche 24 et le tiroir de collection de graisses de cuisson droit 26 peuvent être configurés pour être montés sur le cadre 38 par une face avant du barbecue 2 et en alternance démontés du cadre 38 par la face avant du barbecue 2. Le tiroir de collection de graisses de cuisson gauche 24 peut être disposé sous la grille de cuisson 14 afin de collecter les graisses de cuisson d'aliments disposés sur la grille de cuisson 14. Le tiroir de collection de graisses de cuisson droit 26 peut être disposé sous la plaque de cuisson 16 afin de collecter les graisses de cuisson d'aliments disposés sur la plaque de cuisson 16. Ici, le tiroir de collection de graisses de cuisson gauche 24 et le tiroir de collection de graisses de cuisson droit 26 sont identiques. Aussi, seul le tiroir de collection de graisses de cuisson gauche 24 est décrit plus en détail par la suite. Dans une forme de réalisation, la taille du tiroir de collection de graisses de cuisson gauche 24 et la taille du tiroir de collection de graisses de cuisson droit 26 peuvent être différentes en fonction de la largeur et/ou du nombre de brûleurs 68 du barbecue 2.

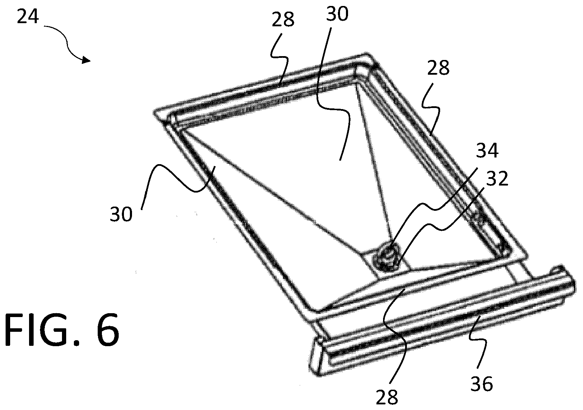

Le tiroir de collection de graisses de cuisson gauche 24 (plus visible à la Figure 6) peut comprendre des parois latérales 28 et une paroi de fond 30. La paroi de fond 30 peut comprendre des portions inclinées par rapport à l'horizontale et une portion horizontale. Les portions inclinées peuvent converger vers la portion horizontale. Ici, les portions inclinées sont trapézoïdales.

Le tiroir de collection de graisses de cuisson gauche 24 peut comprendre un orifice de vidange 32. L'orifice de vidange 32 permet d'effectuer une vidange des graisses de cuisson collectées dans le tiroir de collection de graisses de cuisson gauche 24 sans démonter complètement le tiroir de collection de graisses de cuisson gauche 24 du cadre 38 et sans pencher ou retourner le tiroir de collection de graisses de cuisson gauche 24. Ainsi, les risques de salissure du barbecue 2 de l'utilisateur sont réduits. L'accès par la face avant au tiroir de collection de graisses de cuisson gauche 24 est également facilité. L'orifice de vidange 32 peut être disposé sur la portion horizontale de la paroi de fond 30. Ainsi, la paroi de fond 30 est conformée de manière à guider les graisses de cuisson vers l'orifice de vidange 32 par écoulement. L'orifice de vidange 32 permet d'effectuer une vidange des graisses de cuisson collectées dans le tiroir de collection de graisses de cuisson gauche 24 en laissant un minimum ou sans laisser de graisses de cuisson résiduelles. Ainsi, le nettoyage du tiroir de collection de graisses de cuisson gauche 24 est facilité.

Le tiroir de collection de graisses de cuisson gauche 24 peut comprendre un obturateur ou bouchon 34 configuré pour obturer l'orifice de vidange 32 et en alternance désobturer l'orifice de vidange 32. L'obturateur 34 permet d'effectuer la vidange des graisses de cuisson collectées dans le tiroir de collection de graisses de cuisson gauche 24 de manière contrôlée par exemple lorsque les graisses de cuissons ne sont plus brûlantes. Ainsi, le risque de brûlure de l'utilisateur est réduit. L'obturateur 34 permet également d'éviter de manipuler le tiroir de collection de graisses de cuisson gauche 24 pour vider l'eau. Cela diminue le risque de renverser le tiroir de collection de graisses de cuisson gauche 24 lors de l'extraction de celui-ci à cause de sa taille ou son poids.

Le barbecue (2) peut comporter un organe de commande (non représenté) configuré pour être déplacé manuellement par l'utilisateur entre une première position de commande dans laquelle l'organe de commande commande (mécaniquement ou électroniquement) l'obturateur (34) de manière à obturer l'orifice de vidange (32) et en alternance dans une seconde position de commande dans laquelle l'organe de commande commande (mécaniquement ou électroniquement) l'obturateur (34) de manière à désobturer l'orifice de vidange (32).

L'organe de commande peut être disposé à l'extérieur du collecteur de graisses de cuisson (à l'extérieur d'un volume recevant l'eau et/ou les graisses de cuisson) de manière à permettre le déplacement de l'organe de commande par l'utilisateur sans toucher l'eau et/les graisses de cuisson.

L'organe de commande peut prendre la forme d'un bouton ou d'un levier. L'organe de commande peut être monté sur une poignée du tiroir de collection de graisses de cuisson gauche 24. L'organe de commande peut prendre la forme d'un tige prolongeant l'obturateur (34) verticalement vers le haut au-dessus d'un niveau d'eau et/ou de graisses de cuissons.

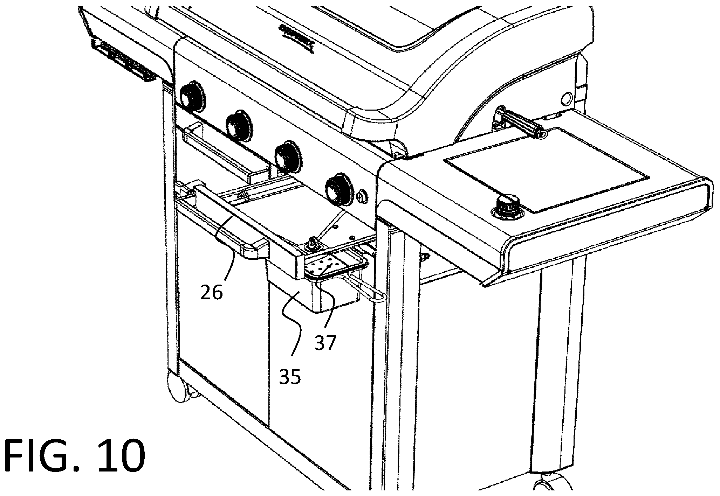

Le tiroir de collection de graisses de cuisson gauche 24 peut être disposé au-dessus du récipient disposé dans le volume de rangement de sorte que le récipient puisse récupérer les graisses de cuisson en provenance du plateau de cuisson gauche 24 lorsque l'obturateur 34 désobture l'orifice de vidange 32. Alternativement ou également, les graisses peuvent être récupérées par un accessoire 35 qui s'accroche de façon permanente ou non sous le tiroir de collection de graisses de cuisson gauche 24. Cet accessoire peut être équipé d'un filtre ou grille 37 qui permet de séparer aisément la partie liquide des déchets solide lors de la récupération des graisses de cuisson. Cette disposition est particulièrement avantageuse dans lorsque le barbecue 2 impose un traitement strict des déchets ménagers. La Figure 10 illustre une forme de réalisation d'un tel accessoire 35 disposé sous le tiroir de collection de graisses de cuisson droit 26. L'accessoire 35 peut être dimensionné de manière à présenter un volume égal à un volume d'eau prédéterminé à verser par l'utilisateur dans le tiroir de collection de graisses de cuisson gauche 24 afin d'assurer une hydratation suffisante des aliments disposés sur la plaque de cuisson 16 ou la grille de cuisson 14. L'accessoire 35 forme ainsi un doseur et facilite le remplissage du tiroir de collection de graisses de cuisson gauche 24 en eau par l'utilisateur.

Le tiroir de collection de graisses de cuisson gauche 24 peut avoir une capacité d'au moins 1 Litre pour un brûleur 68, et préférablement une capacité d'au moins 1.5 Litre pour deux brûleurs 68. Le tiroir de collection de graisses de cuisson gauche 24 peut être rempli d'eau à travers les orifices 17. Les orifices 17 permettent non seulement aux graisses de cuisson d'être collectées par le tiroir de collection de graisses de cuisson gauche 24 mais alternativement ou également de verser de l'eau dans le tiroir de collection de graisses de cuisson gauche 24 afin d'éviter que les graisses de cuisson n'accrochent au tiroir de graisses de cuisson sans démonter le tiroir de collection de graisses de cuisson gauche 24. Ainsi, le nettoyage du tiroir de collection de graisses de cuisson gauche 24 peut être facilité. L'eau permet de faciliter l'évacuation des graisses de cuisson collectées par le tiroir de collection de graisses de cuisson gauche 24 et de faciliter le nettoyage du tiroir collection de graisses de cuisson gauche 24. L'eau permet également de créer une quantité de vapeur suffisante lors de la cuisson afin d'hydrater les aliments disposés sur la grille de cuisson 14.

Le tiroir de collection de graisses de cuisson gauche 24 peut comprendre une poignée 36 monté sur une paroi latérale avant 28 afin de faciliter la manipulation du tiroir de collection de graisses de cuisson gauche 24.

Le barbecue 2 peut comporter un cadre 38 (plus visible aux Figures 5 et 7). Le cadre 38 peut être monté sur le chariot 4 ou faire partie intégrante de la structure du chariot 4. Le cadre 38 peut s'étendre au-dessus de l'écran de protection de chaleur 22 afin de permettre le montage et en alternance le démontage du tiroir de collection de graisses de cuisson gauche 24 et du tiroir de collection de graisses de cuisson droit 26. Le cadre 38 peut comprendre une partie inférieure 40 et une partie supérieure 42. La partie inférieure 40 peut comprendre une portion avant montée à l'avant du chariot 4 et des portions latérales montées sur les côtés du chariot 4 et s'étendant de l'avant du chariot 4 vers l'arrière du chariot 4. La partie supérieure 42 peut comprendre une portion arrière montée à l'arrière du chariot 4 et des portions latérales montées sur les côtés du chariot 4 et s'étendant de l'arrière du chariot 4 vers l'avant du chariot 4. Les portions latérales de la partie supérieure 42 du support 38 peuvent comprendre des extrémités distales formant des retours ou butées 44.

La portion avant de la partie inférieure 40 peut être connectée à la portion arrière de la partie supérieure 42 par une portion centrale 46 formant écran. La portion centrale 46 peut être agencée au-dessus d'un interstice entre le tiroir de collection de graisses de cuisson gauche 24 et le tiroir de collection de graisses de cuisson droit 26 de manière à empêcher les graisses de cuisson de tomber dans le volume de rangement. La portion centrale 46 peut comprendre une portion gauche inclinée par rapport à l'horizontale de manière à guider les graisses de cuisson par écoulement vers le tiroir de collection de graisses de cuisson gauche 24 et une portion droite inclinée par rapport à l'horizontale de manière à guider les graisses de cuisson par écoulement vers le tiroir de collection de graisses de cuisson droit 26.

Le barbecue 2 peut comporter une cuve de cuisson 48 (plus visible aux Figures 2, 3 et 5). La cuve de cuisson 48 peut comprendre une paroi latérale gauche 50, une paroi latérale droite 52, une paroi latérale arrière gauche 54, une paroi latérale arrière droite 56, une paroi latérale avant gauche 58 et une paroi latérale avant droite 60. La paroi latérale gauche 50, la paroi latérale droite 52, la paroi latérale arrière gauche 54, la paroi latérale arrière droite 56, la paroi latérale avant gauche 58 et la paroi latérale avant droite 60 peuvent être configurées de manière à être montées sur le cadre 38 et en alternance démontées du cadre 38.

La paroi latérale gauche 50, la paroi latérale droite 52, la paroi latérale arrière gauche 54, la paroi latérale arrière droite 56, la paroi latérale avant gauche 58 et la paroi latérale avant droite 60 peuvent être inclinées par rapport à la verticale de manière à guider les graisses de cuisson vers le tiroir de collection de graisse de cuisson 24 et le tiroir de collection de graisse de cuisson droit 26 par écoulement.

La paroi latérale gauche 50, la paroi latérale droite 52, la paroi latérale arrière gauche 54, la paroi latérale arrière droite 56, la paroi latérale avant gauche 58 et la paroi latérale avant droite 60 peuvent comprendre des bords supérieurs et des bords latéraux.

Le bord supérieur de paroi latérale gauche 50, le bord supérieur de la paroi latérale droite 52, le bord supérieur de la paroi latérale arrière gauche 54 et le bord supérieur de la paroi latérale arrière droite 56 peuvent être conformés pour reposer sur la partie supérieure 42 du cadre 38 ou du bloc technique gaz 62. Le bord supérieur de paroi latérale gauche 50, le bord supérieur de la paroi latérale droite 52, le bord supérieur de la paroi latérale arrière gauche 54, le bord supérieur de la paroi latérale arrière droite 56 peuvent comprendre des crochets ou langues permettant de crocheter la partie supérieure 42 du cadre 38 . Ainsi, la paroi latérale gauche 50, la paroi latérale droite 52, la paroi latérale arrière gauche 54 et la paroi latérale arrière droite 56 sur la partie supérieure 42 peuvent être verrouillées sur le support horizontalement et en alternance déverrouiller horizontalement du cadre 38.

La paroi latérale gauche 50, la paroi latérale droite 52, la paroi latérale arrière gauche 54, la paroi latérale arrière droite 56, la paroi latérale avant gauche 58 et la paroi latérale avant droite 60 peuvent être conformées pour assurer une étanchéité latérale de la cuve de cuisson 48.

Ici, un bord latéral de la paroi latérale gauche 50 est conformé pour reposer sur ou sous un bord latéral de la paroi latérale arrière gauche 54. Un autre bord latéral de la paroi latérale gauche 50 est conformé pour reposer sur ou sous un bord latéral de la paroi latérale avant gauche 58. Un bord latéral de la paroi latérale droite 52 est conformé pour reposer sur ou sous un bord latéral de la paroi latérale arrière droite 56. Un autre bord latéral de la paroi latérale droite 52 est conformé pour reposer sur ou sous un bord latéral de la paroi latérale avant droite 60. Un bord latéral de la paroi latérale arrière gauche 54 est conformé pour reposer sur ou sous un bord latéral de la paroi latérale arrière droite 56. Un bord latérale de la paroi latérale avant gauche 58 est conformé pour reposer sur ou sous un bord latéral de la paroi latérale avant droite 60.

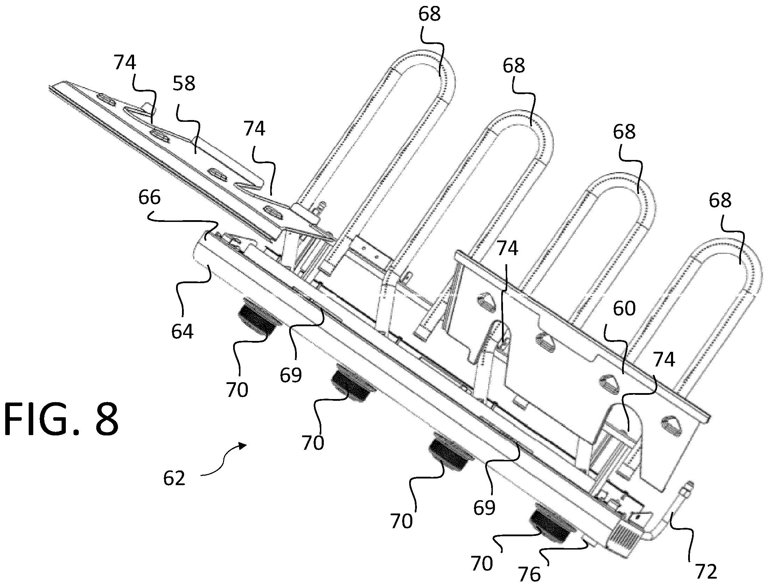

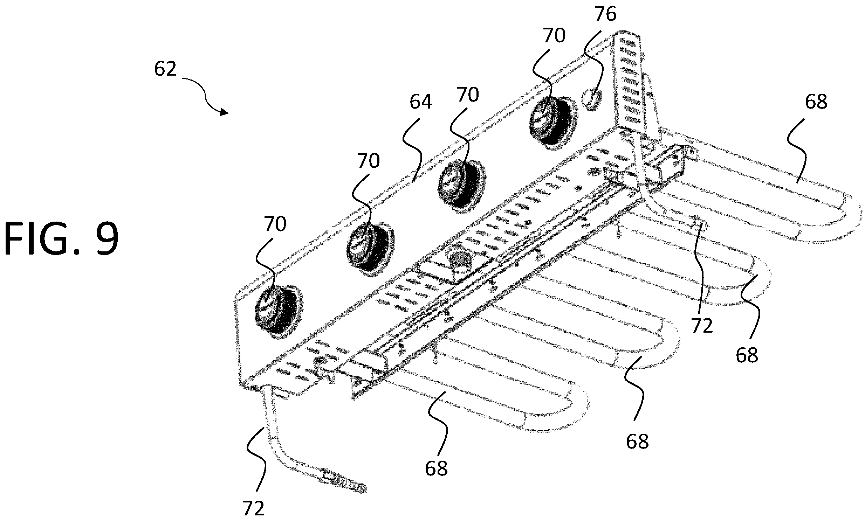

Le barbecue 2 peut comporter un bloc technique gaz 62, également appelé bloc gaz ou bloc. Le bloc technique gaz 62 (plus visible aux Figures 8 et 9) comporte un boîtier, des brûleurs 68, des composants gaz et des composants électriques. Le boîtier peut comprendre une façade avant 64 et une façade arrière 66 qui sert d'écran de chaleur. La façade arrière 66 peut comprendre des encoches 69.

La paroi latérale avant gauche 58 et la paroi latérale avant droite 60 de la cuve de cuisson 48 peuvent être configurées pour être montées sur le bloc technique gaz 62 et en alternance démontées du bloc technique gaz 62. La paroi latérale avant gauche 58 et la paroi latérale avant droite 60 de la cuve de cuisson 48 peuvent être configurées pour être verrouillées sur le bloc technique gaz 62 et en alternance déverrouillée du bloc technique gaz 62.

Ici, le bord supérieur de la paroi latérale avant gauche 58 et le bord supérieur de la paroi latéral avant droite 60 de la cuve de cuisson 48 sont conformés pour reposer sur un bord supérieur de la façade arrière 66. Le bord supérieur de la paroi latérale avant gauche 58 et le bord supérieur de la paroi latéral avant droite 60 de la cuve de cuisson 48 comprennent des crochets ou langues conformés pour être reçus dans les encoches 69 du boîtier afin de verrouiller horizontalement et en alternance déverrouiller horizontalement la paroi latérale avant gauche 58 et la paroi latérale avant droite 60 de la cuve de cuisson 48 sur le bloc technique gaz 62.

Les composants gaz peuvent comprendre des boutons de régulation d'alimentation en gaz 70 des brûleurs 68 et/ou des conduits d'alimentation en gaz 72 des brûleurs 68. Les boutons de régulation d'alimentation en gaz 70 peuvent être montés sur la façade avant 64 du boîtier technique gaz 62.

La paroi latérale avant gauche 58 et la paroi latérale avant droit 60 de la cuve de cuisson 48 peuvent comprendre des découpes ou encoches 74 pour permettre le passage des brûleurs 68 à travers la paroi latérale avant gauche 58 et la paroi latérale avant droit 60 de la cuve de cuisson 48 lorsque la paroi latérale avant gauche 58 et la paroi latérale avant droit 60 de la cuve de cuisson 48 sont montées sur le bloc technique gaz 62.

Les composant électriques peuvent comprendre une batterie, un bouton de mise à feu 76 des brûleurs 68, des indicateurs lumineux de mise à feu des brûleurs 68, un circuit électronique connectant la batterie au bouton de mise à feu des brûleurs 68 et/ou un circuit électronique connectant la batterie aux indicateurs lumineux de mise à feu des brûleurs 68. Le bouton de mise à feu 76 des brûleurs 68 et les indicateurs lumineux de mise à feu des brûleurs 68 peuvent être montés sur la façade avant 64 du boîtier. Les indicateurs lumineux de mise à feu des brûleurs 68 peuvent être intégrés aux boutons de régulation d'alimentation en gaz 70 des brûleurs 68.

Le bloc technique gaz 62 peut comprendre un bouclier thermique configuré pour isoler thermiquement les boutons de régulation d'alimentation gaz 70 des brûleurs 68, la batterie, le bouton de mise à feu 76 des brûleurs 68, les indicateurs lumineux de mise à feu des brûleurs 68, le circuit électronique connectant la batterie au bouton de mise à feu 76 des brûleurs 68 et/ou le circuit électronique connectant la batterie aux indicateurs lumineux de mise à feu des brûleurs 68. Ainsi, le risque d'altération des boutons de régulation d'alimentation gaz 70 des brûleurs 68, de la batterie, du bouton de mise à feu 76 des brûleurs 68, des indicateurs lumineux de mise à feu des brûleurs 68, du circuit électronique connectant la batterie au bouton de mise à feu 76 des brûleurs 68 et/ou du circuit électronique connectant la batterie aux indicateurs lumineux de mise à feu des brûleurs 68 peut être réduit et la durée de vie du barbecue 2 peut être allongée. Le bouclier thermique peut être formé directement par la façade arrière 66 du boîtier ou peut être disposé entre la façade avant 64 du boîtier et la façade arrière 66 du boîtier. Le bouclier thermique peut comporter de la tôle aluminée, tôle zinguée, tôle émaillée, tôle inox. Des isolants spécifiques en fibre thermique peuvent compléter la protection thermique des composants électroniques présents dans le bloc technique gaz 62.

Le bloc technique gaz 62 peut être configuré pour être monté sur le cadre 38 d'un seul tenant et en alternance démonté du cadre 38 d'un seul tenant (d'un seul ensemble sans séparer le boîtier, les brûleurs 68, les composants électroniques et/ou les composants gaz). Ainsi, le montage et le démontage du bloc technique gaz 62 peut être facilité. Ici, le bloc technique gaz 62 est configuré pour être monté sur le cadre 38 par une face avant du barbecue 2 et en alternance démonté du cadre 38 par la face avant du barbecue 2. Le bloc 62 peut être configuré pour être monté sur le cadre 38 par mouvement (avec ou sans coulissement) horizontal d'avant en arrière et/ou par mouvement (avec ou sans coulissement) vertical de haut en bas et démonté du cadre 38 par mouvement (avec ou sans coulissement) horizontal d'arrière en avant et/ou par mouvement (avec ou sans coulissement) vertical de bas en haut.

Le bloc technique gaz 62 peut être configuré pour être verrouillé sur le cadre 38 et en alternance déverrouillé du cadre 38. Ainsi, le risque de démontage accidentel du bloc 62 est réduit. Ici, le bloc est verrouillé horizontalement sur le cadre 38 et déverrouillé horizontalement du cadre 38 par l'intermédiaire de la paroi latérale avant gauche 58 et la paroi latérale avant droite 60 de la cuve de cuisson 48.

Lorsque le bloc technique gaz 62 est monté sur le cadre 38 et la paroi latérale avant gauche 58 et la paroi latérale avant droite 60 de la cuve de cuisson 48 sont montées sur le cadre 38, la façade arrière 66 du boîtier peut venir buter contre le cadre 38, et plus particulièrement contre une face avant des retours 44. La paroi latérale avant gauche 58 et la paroi latérale avant droite 60 de la cuve de cuisson 48 peuvent être montées sur la façade arrière 66 du boîtier et peuvent venir buter contre le cadre 38, et plus particulièrement contre une face arrière des retours 44. Le bloc technique gaz 62 ne peut pas être démonté du cadre 38 par mouvement horizontal d'arrière en avant. Le bloc technique gaz 62 peut être verrouillé horizontalement. Le bloc technique gaz 62 peut être verrouillé verticalement lors de l'insertion de la paroi latérale avant gauche 58 et la paroi latérale avant droite 60 grâce aux encoches 69. Le bloc technique gaz 62 peut ne pas être verrouillé verticalement dans certaines formes de réalisation.

Lorsque le bloc technique gaz 62 est monté sur le support 38 et la paroi latérale avant gauche 58 et la paroi latérale avant droite 60 de la cuve de cuisson 48 sont démontées du support 38, la façade arrière 66 du boîtier peut venir buter contre le support 38, et plus particulièrement contre la face avant des retours 44. En revanche, la paroi latérale avant gauche 58 et la paroi latérale avant droite 60 de la cuve de cuisson 48 peuvent être démontées de la façade arrière 66 du boîtier et peuvent ne plus venir buter contre le support 38, et plus particulièrement contre la face arrière des retours 44. Le bloc 62 peut être démonté du support 38 par mouvement horizontal d'arrière en avant ou par mouvement vertical de bas en haut..

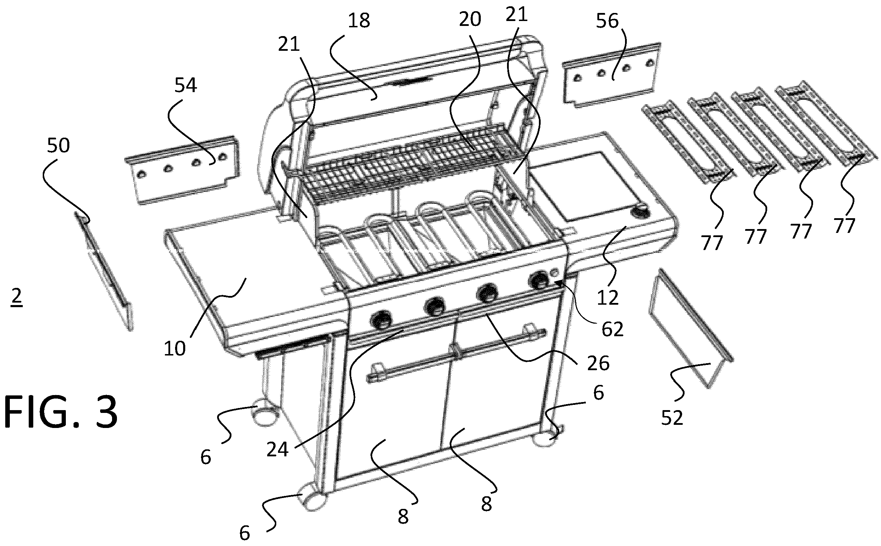

Le barbecue 2 peut comporter des pare-brûleurs 77 (plus visibles aux Figures 2 et 3) configurés pour être monté sur les brûleurs 68 et en alternance démonté des brûleurs 68. Ici, les pare-brûleurs 77 sont simplement posés au-dessus des brûleurs 68. Les pare-brûleurs 77peuvent être conformés pour permettre aux graisses de cuisson de tomber dans le tiroir de collection de graisse de cuisson gauche 24 et dans le tiroir de collection de graisse de cuisson droit 26 sans tomber sur les brûleurs 68. Ici, les pare-brûleurs 77comprennent des ouvertures centrales.

Dans la configuration d'utilisation les graisses de cuisson des aliments disposés sur la grille de cuisson 14, sur la plaque de cuisson 16 et/ou sur la grille de mijotage 20 peuvent tomber dans la cuve de cuisson 48 et peuvent être collectées par le tiroir de collection de graisses de cuisson gauche 24 et le tiroir de collection de graisses de cuisson droit 26. Les graisses de cuisson dans le tiroir de collection de graisse de cuisson gauche 24 et dans le tiroir de collection de graisse de cuisson droit 26 peuvent être réutilisées pour la réalisation de sauces. Alternativement, les graisses de cuisson dans le tiroir de collection de graisses de cuisson gauche 24 et dans le tiroir de collection de graisses de cuisson droit 26 peuvent être récupérées dans le récipient disposé dans le volume de rangement ou par l'autre accessoire 35 dédié à cet usage, et déposées en déchetterie par l'utilisateur une fois le récipient plein. Le barbecue 2 peut être alors être transformé de la configuration d'utilisation à une des configurations de nettoyage afin de nettoyer tout ou partie des éléments du barbecue 2.

Dans une configuration de nettoyage, la paroi latérale gauche 50, la paroi latérale droite 52, la paroi latérale arrière gauche 54 et la paroi latérale arrière droite 56, la paroi latérale avant gauche 58 peuvent être démontées du support cadre 38 et lavées au lave-vaisselle ou à la main. La paroi latérale avant gauche 58 et la paroi latérale avant droite 60 de la cuve de cuisson 48 peuvent être démontées de la façade arrière 66 du boîtier et lavées au lave-vaisselle ou à la main. Les pare-brûleurs 77 peuvent être démontés des brûleurs 68 et lavés au lave-vaisselle ou à la main. Le bloc technique gaz 62 peut être démonté du cadre 38 (si besoin) pour nettoyage et/ou maintenance. Le tiroir de collection de graisses de cuisson gauche 24 et le tiroir de collection de graisses de cuisson droit 26 peuvent être démontés du support et lavés au lave-vaisselle ou à la main.

Comme il va de soi, la présente demande ne se limite pas à la seule forme d'exécution décrite ci-dessus à titre d'exemple, elle en embrasse au contraire toutes les variantes de réalisation.

Dans une variante de réalisation le barbecue 2 n'est pas un barbecue à gaz. Le barbecue 2 peut être un barbecue électrique. Le bloc technique gaz 62 peut être remplacer par un bloc technique électrique comportant des résistances électriques à la place des brûleurs 68 et des boutons de régulation en électricité à la place de bouton de régulation en gaz 70 des brûleurs 68.

Dans une variante de réalisation le barbecue 2 n'intègre pas le chariot 4. Le barbecue 2 peut être distinct du chariot 4. Le barbecue 2 peut être monté sur le chariot 4 et en alternance démonté du chariot 4. Ainsi, lorsque le barbecue 2 est défectueux, le barbecue 2 peut être remplacé tandis que le chariot 4 peut être conservé ou vice versa. La maintenance peut ainsi être effectuée plus facilement et à moindre coût pour l'utilisateur. Le barbecue 2 peut également être configuré pour être verrouillé sur le chariot 4 et en alternance verrouillé du chariot 4. Ainsi, le risque de démontage accidentel du barbecue 2 du chariot 4 en configuration d'utilisation ou en configuration de nettoyage est réduit.

## Revendications

1. Barbecue (2) comportant:
- un cadre (38) ; et
- un premier collecteur de graisses de cuisson (24) configuré pour être monté sur le cadre (38) par une face avant du barbecue (2) et en alternance démonté du cadre (38) par la face avant du barbecue (2) pour collecter des premières graisses de cuisson ;
**caracterisé en ce que en ce que** le barbecue (2) comporte :
- un second collecteur de graisses de cuisson (26) configuré pour être monté sur le cadre (38) par la face avant du barbecue et en alternance démonté du support par la face avant du barbecue (2) pour collecter des secondes graisses de caisson.

2. Le barbecue (2) selon la revendication 1, dans lequel le premier collecteur de graisses de cuisson (24) ou le second collecteur de graisses de cuisson (26) comporte un orifice de vidange (32).

3. Le barbecue (2) selon la revendication 2, dans lequel l'orifice de vidange (32) est agencé pour effectuer une vidange des graisses de cuisson collectées dans le premier collecteur de graisses de cuisson (24) ou le second collecteur de graisses de cuisson (26) sans démonter le collecteur de graisses de cuisson du cadre (38) et/ou sans pencher ou retourner le premier collecteur de graisses de cuisson (24) ou le second collecteur de graisses de cuisson (26).

4. Le barbecue (2) selon l'une quelconque la revendication 2 ou la revendication 3, dans lequel l'orifice de vidange (32) est disposé sur une paroi de fond (30) du premier collecteur de graisses de cuisson (24) ou du second collecteur de graisses de cuisson (26).

5. Le barbecue (2) selon la revendication 4, dans lequel la paroi de fond (30) est conformée de manière à guider les graisses de cuisson collectées dans le premier collecteur de graisses de cuisson (24) ou le second collecteur de graisses de cuisson (26) vers l'orifice de vidange (32) par écoulement.

6. Le barbecue (2) selon la revendication 5, dans lequel la paroi de fond (30) comprend une pluralité de portions convergeant vers l'orifice de vidange (32).

7. Le barbecue (2) selon la revendication 6, dans lequel la paroi de fond (30) comprend une pluralité de portions trapézoïdales convergeant vers l'orifice de vidange (32).

8. Le barbecue (2) selon l'une quelconque des revendications 1 à 7, dans lequel le barbecue (2) comporte une plaque de cuisson (16) ou une grille de cuisson (14)
dans lequel la plaque de cuisson (16) ou la grille de cuisson (14) comporte au moins un orifice (17) ; et
dans lequel le collecteur de graisses de cuisson et la plaque de cuisson (16) ou la grille de cuisson (14) sont configurés pour être agencés de sorte que le premier collecteur de graisses de cuisson (24) ou le second collecteur de graisses de cuisson (26) soit disposé sous l'orifice (17).

9. Le barbecue (2) selon l'une quelconque des revendications 2 à 8, dans lequel le premier collecteur de graisses de cuisson (24) ou le second collecteur de graisses de cuisson (26) comporte un obturateur (34) configuré pour obturer l'orifice de vidange (32) et en alternance désobturer l'orifice de vidange (32).

10. Le barbecue (2) selon l'une quelconque des revendications 2 à 9, dans lequel le barbecue (2) comporte un organe de commande configuré pour être déplacé entre une première position de commande dans laquelle l'organe de commande commande l'obturateur (34) de manière à obturer l'orifice de vidange (32) et en alternance dans une seconde position de commande dans laquelle l'organe de commande commande l'obturateur (34) de manière à désobturer l'orifice de vidange (32).

11. Le barbecue (2) selon la revendication 10, dans lequel l'organe de commande est disposé à l'extérieur du premier collecteur de graisses de cuisson (24) ou du second collecteur de graisses de cuisson (26) de manière à permettre le déplacement de l'organe de commande sans toucher les graisses de cuisson.

12. Le barbecue (2) selon l'une quelconque des revendications 1 à 11, dans lequel le barbecue (2) comporte un récipient agencé pour récupérer les graisses de cuisson en provenance du premier collecteur de graisses de cuisson (24) du second collecteur de graisses de cuisson (26).

13. Le barbecue (2) selon l'une quelconque des revendications 1 à 12, dans lequel le premier collecteur de graisses de cuisson (24) ou le second collecteur de graisses de cuisson (26) a une capacité d'au moins 1 litre et est disposé à l'aplomb d'un brûleur de manière à permettre une hydratation d'aliment disposés sur une grille de cuisson (14) ou une plaque de cuisson (16) lorsque le premier collecteur de graisses de cuisson (24) ou le second collecteur de graisses de cuisson (26) est rempli d'eau.

## Patentansprüche

1. Grill (2) umfassend:
- einen Rahmen (38); und
- einen ersten Bratenfettauffangbehälter (24), der an der Vorderseite des Grills (2) am Rahmen (38) befestigt und abwechselnd von der Vorderseite des Grills (2) vom Rahmen (38) abgenommen werden kann, um das erste Fett aufzufangen;
**dadurch gekennzeichnet, dass** der Grill (2) Folgendes umfasst:
- einen zweiten Bratenfettauffangbehälter (26), der an der Vorderseite des Grills am Rahmen (38) befestigt und abwechselnd von der Halterung an der Vorderseite des Grills (2) abgenommen werden kann, um überschüssiges Fett aus dem Grillbehälter aufzufangen.

2. Grill (2) nach Anspruch 1, bei dem der erste Bratenfettauffangbehälter (24) oder der zweite Bratenfettauffangbehälter (26) ein Ablaufloch (32) aufweist.

3. Grill (2) nach Anspruch 2, bei dem die Ablauföffnung (32) so angeordnet ist, dass das im ersten Bratenfettauffangbehälter (24) oder im zweiten Bratenfettauffangbehälter (26) gesammelte Bratenfett abgelassen werden kann, ohne den Bratenfettauffangbehälter vom Rahmen (38) zu entfernen und/oder ohne den ersten Bratenfettauffangbehälter (24) oder den zweiten Bratenfettauffangbehälter (26) zu kippen oder umzudrehen.

4. Grill (2) nach einem der Ansprüche 2 oder 3, bei dem die Ablauföffnung (32) an einer Bodenwand (30) des ersten Bratenfettauffangbehälters (24) oder des zweiten Bratenfettauffangbehälters (26) angeordnet ist.

5. Grill (2) nach Anspruch 4, bei dem die Bodenwand (30) so geformt ist, dass das im ersten Bratenfettauffangbehälter (24) oder im zweiten Bratenfettauffangbehälter (26) gesammelte Bratenfett durch einen Durchfluss zur Ablauföffnung (32) geleitet wird.

6. Grill (2) nach Anspruch 5, bei dem die Bodenwand (30) eine Vielzahl von Abschnitten aufweist, die sich zur Ablauföffnung (32) hin verjüngen.

7. Grill (2) nach Anspruch 6, bei dem die Bodenwand (30) eine Vielzahl von trapezförmigen Abschnitten aufweist, die sich zur Ablauföffnung (32) hin verjüngen.

8. Grill (2) nach einem der Ansprüche 1 bis 7, wobei der Grill (2) eine Grillplatte (16) oder einen Grillrost (14) umfasst,
wobei die Grillplatte (16) oder der Grillrost (14) mindestens eine Öffnung (17) aufweist; und
wobei der Bratenfettauffangbehälter und die Grillplatte (16) oder der Grillrost (14) so angeordnet sind, dass der erste Bratenfettauffangbehälter (24) oder der zweite Bratenfettauffangbehälter (26) unter der Öffnung (17) angeordnet ist.

9. Grill (2) nach einem der Ansprüche 2 bis 8, wobei der erste Bratenfettauffangbehälter (24) oder der zweite Bratenfettauffangbehälter (26) eine Klappe (34) aufweist, die so konfiguriert ist, dass sie die Ablauföffnung (32) verschließt und die Ablauföffnung (32) abwechselnd öffnet.

10. Grill (2) nach einem der Ansprüche 2 bis 9, wobei der Grill (2) ein Bedienelement umfasst, das zwischen einer ersten Steuerposition, in der das Bedienelement den Verschluss (34) so steuert, dass die Ablauföffnung (32) geschlossen wird, und abwechselnd einer zweiten Steuerposition, in der das Bedienelement den Verschluss (34) so steuert, dass die Ablauföffnung (32) geöffnet wird, bewegt werden kann.

11. Grill (2) nach Anspruch 10, bei dem das Steuerelement außerhalb des ersten Bratenfettauffangbehälters (24) bzw. des zweiten Bratenfettauffangbehälters (26) angeordnet ist, sodass das Steuerelement bewegt werden kann, ohne mit dem Bratenfett in Berührung zu kommen.

12. Grill (2) nach einem der Ansprüche 1 bis 11, wobei der Grill (2) einen Behälter umfasst, der so angeordnet ist, dass er Bratenfette aus dem ersten Bratenfettauffangbehälter (24) des zweiten Bratenfettauffangbehälter (26) auffängt.

13. Grill (2) nach einem der Ansprüche 1 bis 12, wobei der erste Bratenfettauffangbehälter (24) oder der zweite Bratenfettauffangbehälter (26) ein Fassungsvermögen von mindestens 1 Liter aufweist und direkt über einem Brenner angeordnet ist, um die Befeuchtung von auf einem Grillrost (14) oder einer Grillplatte (16) platzierten Lebensmitteln zu ermöglichen, wenn der erste Bratenfettauffangbehälter (24) oder der zweite Bratenfettauffangbehälter (26) mit Wasser gefüllt ist.

## Claims

1. Barbecue (2) comprising:
- a frame (38); and
- a first cooking grease collector (24) configured to be mounted on the frame (38) by a front of the barbecue (2) and alternately removed from the frame (38) by the front of the barbecue (2) to collect first cooking grease; **characterized in that** the barbecue (2) comprises:
- a second cooking grease collector (26) configured to be mounted on the frame (38) by the front of the barbecue and alternately removed from the support by the front of the barbecue (2) to collect second grease from the box.

2. The barbecue (2) according to claim 1, wherein the first cooking grease collector (24) or the second cooking grease collector (26) includes a drain hole (32).

3. The barbecue (2) according to claim 2, wherein the drain hole (32) is arranged to carry out a draining of the cooking grease collected in the first cooking grease collector (24) or the second cooking grease collector (26) without removing the cooking grease collector from the frame (38) and/or without tilting or turning over the first cooking grease collector (24) or the second cooking grease collector (26).

4. The barbecue (2) according to any one of claim 2 or claim 3, wherein the drain hole (32) is disposed on a bottom wall (30) of the first cooking grease collector (24) or of the second cooking grease collector (26).

5. The barbecue (2) according to claim 4, wherein the bottom wall (30) is shaped so as to guide the cooking grease collected in the first cooking grease collector (24) or the second cooking grease collector (26) towards the drain hole (32) by gravity flow.

6. The barbecue (2) according to claim 5, wherein the bottom wall (30) comprises a plurality of portions converging towards the drain hole (32).

7. The barbecue (2) according to claim 6, wherein the bottom wall (30) comprises a plurality of trapezoidal portions converging towards the drain hole (32).

8. The barbecue (2) according to any one of claims 1 to 7, wherein the barbecue (2) includes a cooking plate (16) or a cooking grid (14)
wherein the cooking plate (16) or the cooking grid (14) includes at least one hole (17); and
wherein the cooking grease collector and the cooking plate (16) or the cooking grid (14) are configured to be arranged so that the first cooking grease collector (24) or the second cooking grease collector (26) is disposed under the hole (17).

9. The barbecue (2) according to any one of claims 2 to 8, wherein the first cooking grease collector (24) or the second cooking grease collector (26) includes a shutter (34) configured to close the drain hole (32) and alternately unclose the drain hole (32).

10. The barbecue (2) according to any one of claims 2 to 9, wherein the barbecue (2) includes a control member configured to be moved between a first control position in which the control member controls the shutter (34) so as to close the drain hole (32) and alternately in a second control position in which the control member controls the shutter (34) so as to unclose the drain hole (32).

11. The barbecue (2) according to claim 10, wherein the control member is disposed outside the first cooking grease collector (24) or the second cooking grease collector (26) so as to allow the control member to move without touching the cooking grease.

12. The barbecue (2) according to any one of claims 1 to 11, wherein the barbecue (2) includes a container arranged to collect cooking grease from the first cooking grease collector (24) of the second cooking grease collector (26).

13. The barbecue (2) according to any one of claims 1 to 12, wherein the first cooking grease collector (24) or the second cooking grease collector (26) has a capacity of at least 1 liter and is disposed directly above a burner so as to allow hydration of food disposed on a cooking grid (14) or a cooking plate (16) when the first cooking grease collector (24) or the second cooking grease collector (26) is filled with water.
